# EUROPÄISCHE PATENTSCHRIFT

(11) **EP 2 202 507 B1**
(45) Veröffentlichungstag und Bekanntmachung des Hinweises auf die Patenterteilung: **08.08.2018**
(21) Anmeldenummer: 09178518.8
(22) Anmeldetag: 09.12.2009
(51) Int. Cl.: G01N 21/90

(54) **Flascheninspektionsvorrichtung mit abbildungskorrigiertem Spiegelkabinett**
Bottle inspection device with image-corrected mirror cabinet
Dispositif d'inspection de bouteilles avec un boîtier de miroirs à visualisation corrigée

(30) Priorität: 24.12.2008 DE 102008063076
(43) Veröffentlichungstag der Anmeldung: 30.06.2010
(73) Patentinhaber: Krones AG, 93073 Neutraubling (DE)
(72) Erfinder: Kwirandt, Rainer, 93073 Neutraubling (DE)
(74) Vertreter: Grünecker Patent- und Rechtsanwälte PartG mbB

(56) Entgegenhaltungen:
- EP-A1- 1 477 794
- EP-A1- 1 985 997
- EP-B1- 0 663 069
- DE-A1- 19 534 347
- DE-U1- 29 606 592
- DE-U1- 29 919 761
- US-A- 4 509 081

## Beschreibung

Die Erfindung betrifft eine Inspektionsvorrichtung zur optischen Prüfung von Flaschen bzw. Behältern, umfassend: eine Bildaufnahmevorrichtung zur Erzeugung eines Bildes mit mehreren horizontal nebeneinander liegenden Bildbereichen, von denen wenigstens zwei Bereiche seitlich der Bildmitte angeordnet sind; und ein Spiegelkabinett mit mehreren Strahlengängen zum Umlenken unterschiedlicher umfänglicher Seitenansichten einer zu prüfenden Flasche in Richtung der Bildbereiche, wobei in jedem Strahlengang separate Umlenkspiegel vorgesehen sind, deren jeweilige Elevation bezüglich einer Grundplatte definiert ist.

Inspektionsvorrichtungen für Flaschen werden z. B. in Getränkeabfülllinien eingesetzt, um beschädigte oder verschmutzte Flaschen zu erkennen. Bekanntermaßen werden unterschiedliche umfängliche Ansichten der Flaschenseitenwand gleichzeitig in einem Spiegelkabinett erzeugt und auf nebeneinander liegende Bereiche eines bildgebenden Sensors abgebildet. Derartige Vorrichtungen sind z. B. in der EP 0663069 oder der DE 19534347 offenbart.

Es ist generell erwünscht, alle Ansichten möglichst verzerrungsfrei, gleich groß und ohne vagabundierende Lichtreflexe auf der Flaschenoberfläche im Durchlicht darzustellen.

Um die Flaschenseitenwand bis zum Bodendom herab im Durchlicht prüfen zu können, darf die Betrachterposition jedoch nur knapp oberhalb des Flaschenbodens liegen. Demzufolge weist die Perspektive in Richtung zur Flasche schräg nach oben, was bei den geforderten Objektivbrennweiten den unerwünschten Effekt der stürzenden Linien verursacht. Dies ist um so störender, je weiter die betreffende Objektkante von der Bildmitte entfernt ist. Werden mehrere Flaschenansichten nebeneinander auf eine Bildfläche projiziert, so scheinen die oberen Bereiche der abgebildeten Flaschen vor allem in der Nähe des seitlichen Bildrandes zur Mitte hin zu kippen.

Die EP 1 985 997 A1 beschreibt eine Inspektionsvorrichtung für Behältnisse, bei der gleichzeitig mehrere unterschiedliche umfängliche Ansichten einer Flasche auf eine Kamera projiziert werden. An seitlichen Strahlengängen ist jeweils ein Umlenkspiegel vorgesehen, der geringfügig verkippt werden kann, um die einzelnen Strahlengänge zueinander auszurichten. Die Spiegel sind dabei im Wesentlichen senkrecht zu einer gemeinsamen Befestigungsplatte angeordnet.

Aus der DE 19534347 ist es bekannt, Umlenkspiegel auf kinematischen 3-Punkt-Lagern anzuordnen und durch deren Drehung um eine horizontale und eine vertikale Achse die Lage der einzelnen Flaschenansichten auf der Bildebene zu verschieben und/oder zu drehen. Stürzende Linien lassen sich auf diese Weise jedoch nicht korrigieren.

Bei den bekannten Anlagen werden die Strahlengänge für alle Flaschenansichten zwischen der Flasche und der Bildebene zugunsten einer scharfen Abbildung im Wesentlichen gleich lang ausgelegt, wie z. B. in der EP 0663069 beschrieben. Dabei tritt jedoch der unerwünschte Effekt auf, dass die Flaschenansichten im Bild um so größer wirken, je weiter sie von der Bildmitte entfernt abgebildet werden.

Der Erfindung liegt die Aufgabe zu Grunde, den oben beschriebenen Nachteil zu vermeiden.

Diese Aufgabe wird mit einer Inspektionsvorrichtung nach Anspruch 1 gelöst.

Demnach sind jeweils zwei der separaten Umlenkspiegel für Strahlengänge, die den seitlichen Bildbereichen zugeordnet sind, gegen eine Normale der Grundplatte derart verkippt, dass eine durch Zentralprojektion verursachte Bildverzerrung in den seitlichen Bildbereichen kompensiert wird. Stürzende Linien können somit für jeden Strahlengang getrennt kompensiert werden, so dass alle abgebildeten Flaschen im Bild im Wesentlichen aufrecht bzw. gerade stehen.

Vorzugsweise ist in den Strahlengängen, die den seitlichen Bildbereichen zugeordnet sind, die Elevation des einen separaten Umlenkspiegels festgelegt und die Elevation des anderen separaten Umlenkspiegels einstellbar. Damit wird die Zahl der zu justierenden Komponenten reduziert.

Vorzugsweise ist in den Strahlengängen, die den seitlichen Bildbereichen zugeordnet sind, ein separater Umlenkspiegel schräg nach oben geneigt und ein Umlenkspiegel schräg nach unten. Dadurch wird das Bild besonders effektiv entzerrt.

Vorzugsweise liegen die Absolutwerte der Kippwinkel der separaten Umlenkspiegel gegen die Normale der Grundplatte in den Strahlengängen, die den seitlichen Bildbereichen zugeordnet sind, im Bereich zwischen 0,01° und 1°. Dies erlaubt eine flexible Anordnung der Komponenten im Spiegelkabinett. Außerdem können handelsübliche Komponenten zur Einstellung der Elevation verwendet werden.

Vorzugsweise sind die separaten Umlenkspiegel für Strahlengänge, die den seitlichen Bildbereichen zugeordnet sind, so verkippt, dass die projizierten Seitenansichten im Bild ferner vertikal zueinander ausgerichtet sind. Dadurch wird die Anzahl der Justageschritte verringert.

Vorzugsweise sind die separaten Umlenkspiegel mit festgelegter Elevation auf Haltern mit einer der Elevation der Umlenkspiegel entsprechend geneigten Montagefläche befestigt. Dies ermöglicht eine genaue, stabile und reproduzierbare Neigung der Umlenkspiegel.

Vorzugsweise sind die separaten Umlenkspiegel für den Strahlengang, der dem mittigen Bildbereich zugeordnet ist, rechtwinklig zur Grundplatte angeordnet. Damit lässt sich der Strahlengang kostengünstig und bei minimalem Justageaufwand realisieren.

Vorzugsweise sind in jedem Strahlengang zwei separate Umlenkspiegel vorgesehen. Dies ermöglicht eine Strahlumlenkung mit einer kleinstmöglichen Anzahl optischer Komponenten. Außerdem wechselt die Drehrichtung von zirkular polarisiertem Licht bei der Reflexion in allen Strahlengängen gleich häufig.

Vorzugsweise ist die Grundplatte im Wesentlichen rechtwinklig zur Symmetrieachse der Flasche ausgerichtet. Dies erleichtert die Montage und Justage des Spiegelkabinetts.

Vorzugsweise sind die Strahlengänge, die den seitlichen Bildbereichen zugeordnet sind, länger als der Strahlengang, der dem mittigen Bildbereich zugeordnet ist, wobei die Längen der Strahlengänge so abgestuft sind, dass die Seitenansichten der Flasche in den Bildbereichen im Wesentlichen gleich groß sind. Dadurch lässt sich die Bildqualität bzw. die Auswertung der Flaschenansichten verbessern.

Vorzugsweise sind die Strahlengänge, die den seitlichen Bildbereichen zugeordnet sind, um so länger, je weiter der ihnen zugeordnete Bildbereich von der Bildmitte entfernt ist, wobei die Längen der Strahlengänge so abgestuft sind, dass die Seitenansichten der Flasche in den Bildbereichen im Wesentlichen gleich groß sind. Dadurch lässt sich die Bildqualität bzw. die Auswertung der Flaschenansichten verbessern.

Vorzugsweise beträgt das Längenverhältnis von Strahlengängen, die benachbarten Bildbereichen zugeordnet sind, zwischen 1,005 und 1,02. Damit lässt sich die Flaschengröße für unterschiedliche Strahlverläufe anpassen und gleichzeitig ein scharfes Bild erzielen.

Vorzugsweise umfasst die Inspektionsvorrichtung ferner eine Lichtquelle zur Durchleuchtung der Flasche. Damit lassen sich besonders kontrastreiche Bilder erzielen. Vorzugsweise ist zwischen den Strahlengängen eine Blende vorgesehen, die verhindert, dass von der Lichtquelle emittiertes Licht durch Mehrfachreflexion an mindestens zwei der Umlenkspiegel auf die Flasche zurück geworfen wird. Dadurch können, durch Optimierung der Spiegelanordnung allein nicht vermeidbare, vagabundierende Lichtreflexe im Spiegelkabinett unterdrückt werden.

Eine Ausführungsform der Erfindung ist nachstehend in der Zeichnung dargestellt. Es zeigen:
- Figur 1: eine perspektivische Aufsicht auf eine erfindungsgemäße Inspektionsvorrichtung;
- Figur 2: eine perspektivische Seitenansicht der Anordnung aus Figur 2;
- Figur 3: eine schematische Darstellung eines Bildes mit unterschiedlichen Ansichten einer zu prüfenden Flasche auf nebeneinander angeordneten Bildbereichen; und
- Figur 4: eine schematische Darstellung einer abgebildeten Flaschenansicht nach erfindungsgemäßer Korrektur einer Bildverzerrung durch stürzende Linien

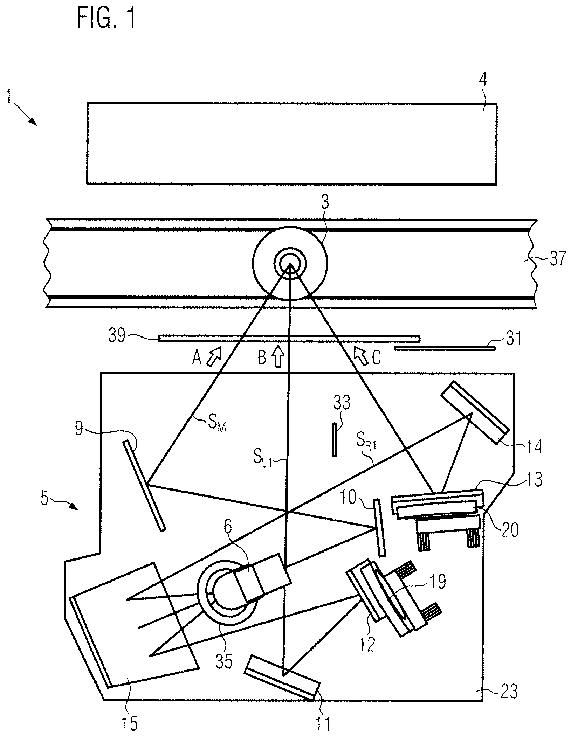

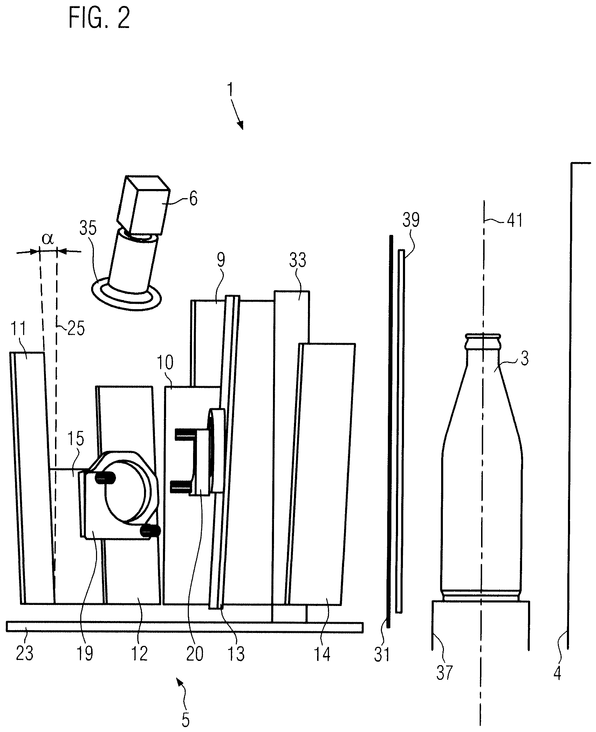

Gemäß Figur 1 und 2 umfasst eine erfindungsgemäße Inspektionsvorrichtung 1 eine Lichtquelle 4 zur Durchleuchtung transparenter Flaschen 3 mit z. B. zirkular polarisiertem Licht und ein Spiegelkabinett 5 mit drei Strahlengängen S_{M}, S_{L1}, S_{R1} zur Abbildung von drei jeweils um bevorzugt 30° oder annähernd 45° umfänglich gedrehten Flaschenansichten A, B, C mit einer Bildaufnahmevorrichtung 6, wie z. B. eine Halbleiter-Kamera.

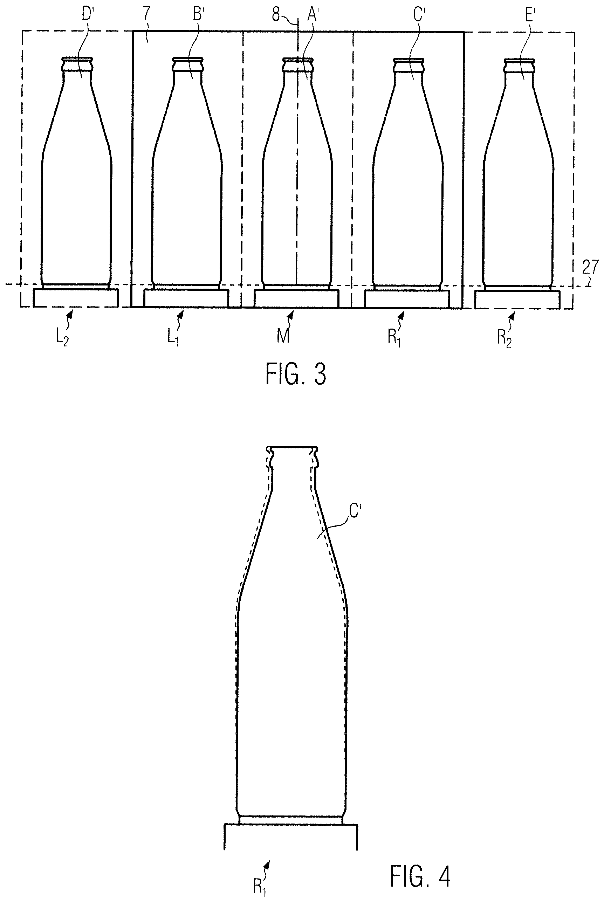

Figur 3 zeigt ein von der Bildaufnahmevorrichtung 6 beispielsweise auf einem (nicht dargestellten) Bildschirm erzeugtes Bild 7, das horizontal in Bildbereiche aufgeteilt ist, nämlich in einen mittigen Bereich M, einem linken seitlichen Bereich L₁ und einen rechten seitlichen Bereich R₁, in denen die projizierten Flaschenansichten A', B' und C' abgebildet werden.

Ausgehend von der Flasche 3 lenken die Umlenkspiegel 9 und 10 den Strahlengang S_{M} über den für alle Strahlengänge S_{M}, S_{L1}, S_{R1} gemeinsamen Umlenkspiegel 15 in den mittigen Bildbereich M, die Umlenkspiegel 11 und 12 den Strahlengang S_{L1} in den linken seitlichen Bildbereich L₁ und die Umlenkspiegel 13 und 14 den Strahlengang S_{R1} in den rechten seitlichen Bildbereich R₁ der Bildaufnahmevorrichtung 6. Von den Strahlengängen S_{M}, S_{L1}, S_{R1} ist in Figur 1 jeweils nur die Strahlachse dargestellt.

Die Umlenkspiegel 9, 10, 11, und 14 sind mit der Übersichtlichkeit halber in den Figuren 1 und 2 nicht dargestellten festen Haltern 16, 17, 18 und 21 auf einer gemeinsamen Grundplatte 23 befestigt, die Umlenkspiegel 12 und 13 mit den einstellbaren Haltern 19 und 20. Zugunsten der Übersichtlichkeit sind in den Figuren 1 und 2 nur die optischen Komponenten abgebildet, nicht jedoch die zugehörigen Montageelemente zur Befestigung der Komponenten auf der Grundplatte 23, wie z. B. Sockel für die einstellbaren Halter 19 und 20 sowie Halter für den gemeinsamen Umlenkspiegel 15 oder die Bildaufnahmevorrichtung 6.

Die Spiegel 9 und 10 sind im rechten Winkel zur Grundplatte 23 angeordnet. Der Spiegel 11 ist unter einem Winkel α gegenüber einer Normalen 25 der Grundplatte 23 geneigt, der Spiegel 12 unter einem Winkel β, der Spiegel 13 unter einem Winkel γ und der Spiegel 14 unter einem Winkel δ. Abbildung 2 zeigt der Übersichtlichkeit halber nur der Winkel α. In den Figuren 1 und 2 sind die Elevationen der Spiegel 9-14 zugunsten einer besseren Verständlichkeit übertrieben dargestellt.

Die Winkel α - δ sind so dimensioniert, dass die in den Bildbereichen M, L₁ und R₁ abgebildeten Flaschenansichten A', B', C' im Bild auf einer gemeinsamen horizontalen Grundlinie 27 zu stehen scheinen und dass gleichzeitig der, durch Zentralprojektion hervorgerufene, Effekt der stürzenden Linien in den seitlichen Bildbereichen L₁ und R₁ minimiert wird. Dieser Effekt ist schematisch in Figur 4 als gestrichelte Linie angedeutet. In seitlichen Bildbereichen sind demnach vertikale Linien vor allem in der oberen Bildhälfte nach innen geneigt. Diese perspektivische Verzerrung wird durch das Zusammenwirken der Kippwinkel α und β bzw. γ und δ weitgehend kompensiert, so dass vertikale Objektkanten bzw. -begrenzungen weitgehend vertikal im Bild 7 abgebildet werden, wie in Figur 4 durch die mit durchgezogenen Linien dargestellte Ansicht C' angedeutet.

Die Länge I_{M} des auf den mittigen Bildbereich M weisenden Strahlengangs S_{M} ist kleiner als die Längen I_{L1} und I_{R1} der auf die seitlichen Bildbereiche L₁ und R₁ weisenden, gleich langen Strahlengänge S_{L1} und S_{R1}, so dass die in den Bildbereichen M, L und R abgebildeten Flaschenansichten A', B' und C' im Bild 7 gleich groß erscheinen.

Mit den derart angepassten Längen I_{M}, I_{L1} und I_{R1} wird eine Situation simuliert, bei der drei gleich große, nebeneinander stehende Flaschen 3 mit der Bildaufnahmevorrichtung 6 ohne Verwendung eines Spiegelkabinetts 5 auf die Bildbereiche L₁, M und R₁ gleich groß projiziert würden. Dies wäre der Fall, wenn sich die Flaschen 3 in einer zur Bildebene parallelen Objektebene befänden. Betrachtet man bei dieser Anordnung z. B. die mittig vor der Bildaufnahmevorrichtung positionierte Flasche 3 und die rechte Flasche 3, so würden diese mit der Bildaufnahmevorrichtung 6 ein rechtwinkliges Dreieck aufspannen. Die Längen der zugehörigen Strahlengänge zwischen der Bildaufnahmevorrichtung 6 und den Flaschen 3 verhielten sich dann aus Sicht der Bildaufnahmevorrichtung 6 wie Ankathete und Hypotenuse im aufgespannten Dreieck. Der mittlere Strahlengang wäre daher der kürzere.

Die Inspektionsvorrichtung 1 umfasst ferner eine Abschirmung 31 und eine Blende 33 zur Reduzierung vagabundierender Reflexe sowie einen Polfilter 35. Der Vollständigkeit halber dargestellt sind ein Transportband 37 für die Flaschen 3 und eine Schutzscheibe 39.

Die Lichtquelle 4 emittiert zirkular polarisiertes Licht. Die Vorrichtung ist jedoch nicht auf die Verwendung zirkular polarisierten Lichts beschränkt.

Die Bildaufnahmevorrichtung 6 ist z. B. eine herkömmliche Halbleiterkamera mit Objektiv und Irisblende. Das Format des erzeugten Bilds 7 kann von dem gezeigten Beispiel abweichen. Denkbar sind insbesondere Panoramaformate, die es erlauben, mehr als drei Ansichten A', B', C' der Flasche nebeneinander darzustellen. Dies ist in Figur 3 durch die gestrichelt gezeichneten, zusätzlichen seitlichen Bildbereiche L₂ und R₂ angedeutet. Ebenso denkbar ist eine beliebige gerade Anzahl von Bildbereichen. Bei gerader Anzahl von Bildbereichen gibt es keinen mittleren Bildbereich M. Sind z. B. vier Bildbereiche vorgesehen, ist das Bild 7 stattdessen in zwei seitliche linke Bildbereiche L₁, L₂ und zwei seitliche rechte Bildbereiche R₁, R₂ aufgeteilt. Die Bereiche L₁ und R₁ würden in diesem Fall in der Bildmitte aneinander grenzen.

Die Bildaufnahmevorrichtung 6 ist drehbar und in zwei Ebenen kippbar in einer nicht dargestellten Halterung gelagert, z. B. mittels handelsüblicher Montageelemente mit DreipunktLagerung.

Der Verlauf der Strahlwege S_{M}, S_{L1} und S_{R1} im Spiegelkabinett 5 wird mit herkömmlichen Raytracing - Verfahren ermittelt. Generelle Anforderungen sind hierbei eine möglichst kompakte Anordnung mit einer möglichst geringen Anzahl optischer Komponenten. Ebenso sollte die Anzahl der separaten Umlenkspiegel 9 - 14 für alle Strahlengänge S_{M}, S_{L1} und S_{R1} gleich sein, um vergleichbare Flaschenansichten A' - C' mit zirkular polarisiertem Licht zu erhalten.

Im Ausführungsbeispiel betragen die Längen I_{M}, I_{L1} und I_{R1} für den Strahlengang S_{M} 1234 mm und für die Strahlengänge S_{L1} und S_{R1} jeweils 1250 mm. Damit wird eine gleich große Darstellung der Flaschenansichten A', B' und C' im Bild 7 erzielt. Die Längen I_{M}, I_{L1} und I_{R1} ergeben sich aus der Länge der Strahlengänge S_{M}, S_{L1} und S_{R1} zwischen der Symmetrieachse 41 der Flasche 3 und der Bildaufnahmevorrichtung 6 bzw. bis zur vorderen Hauptebene des Objektivs.

Je nach Verlauf der Strahlengänge S_{M}, S_{L1} und S_{R1} im Spiegelkabinett 5 und den jeweiligen Abständen zwischen den zugehörigen Flaschenansichten A' - C' im Bild 7 können sowohl die Absolutwerte der Längen I_{M}, I_{L1} und I_{R1} als auch deren Verhältnis zueinander vom Ausführungsbeispiel abweichen. In der Praxis werden die Werte für I_{M}, I_{L1} und I_{R1} im Raytracing so lange verändert, bis ein simuliertes Bild 7 ein optimales Ergebnis liefert.

Jedoch ist bei Betrachtung von zwei nebeneinander abgebildeten, gleich großen Flaschenansichten A' - C' generell derjenige Strahlengang der längere, dessen zugehörige Flaschenansicht im Bild 7 mit größerem horizontalen Abstand zur Bildmitte 8 abgebildet wird. Zur Verdeutlichung sind in Figur 3 zwei zusätzliche seitliche Bildbereiche L₂ und R₂ mit Flaschenansichten D' und E' gestrichelt angedeutet. Um diese zu erzeugen wären zusätzliche (in den Figuren 1 und 2 nicht dargestellte) Strahlengänge S_{L2} und S_{R2} nötig. Somit ist der Strahlengang S_{R1} bei gleich großer Abbildung der Flaschenansichten A' und C' länger als der Strahlengang S_{M}, der Strahlengang S_{L2} wäre für eine gleich große Abbildung der Flaschenansichten B' und D' länger auszulegen als der Strahlengang S_{L1}.

Das Längenverhältnis v von Strahlengängen, die zu im Bild 7 benachbarten Flaschenansichten gehören, z. B. I_{R1}/I_{M} oder I_{R2}/I_{R1} beträgt zwischen 1,005 und 1,02. Die geforderte Bildschärfe bleibt innerhalb dieses Bereichs erhalten. Die Objektive sind so konstruiert, dass die seitlichen Abbildungen gerade bei längerem Weg scharf abgestellt werden.

Die Zuordnung der Flaschenansichten A' - C' zu den Bildbereichen M, L₁ und R₁ ergibt sich aus der Optimierung der im Spiegelkabinett 5 vorgesehenen Strahlverläufe S_{M}, S_{L1} und S_{R1}. Dies gilt auch bei Aufteilung des Bildes 7 in eine davon abweichende Anzahl von Bildbereichen. Die Ansichten A' - C' bzw. weitere Ansichten könnten in vom Ausführungsbeispiel abweichenden Winkelabständen angeordnet sein, z. B. im Abstand von 15° oder 45°.

Der Kippwinkel α des feststehenden Spiegels 11 beträgt im Ausführungsbeispiel 0,45°, der Winkel γ des feststehenden Spiegels 14 beträgt 0,2°. Je nach Position der Spiegel 11 und 14 in den Strahlengängen S_{L1} bzw. S_{R1} können die Werte davon abweichen. Geeignete Kippwinkel α und γ liegen im Bereich von -1° bis -0,01 ° oder von 0,01° bis 1°, wobei die Spiegeloberfläche bei einem positiven Wert schräg nach oben weist, bei einem negativen Wert schräg nach unten. Die Winkel β und δ werden mit den Haltern 19 und 20 so eingestellt, dass die Flaschenansichten A' - C' vertikal zueinander ausgerichtet sind und dabei werden gleichzeitig die stürzenden Linien in den seitlichen Bildbereichen L₁ und R₁ automatisch kompensiert. Auch die Absolutwerte der eingestellten Winkel β und δ liegen im Bereich von 0,01° bis 1°, in Abhängigkeit von den im Raytracing optimierten Strahlverläufen S_{L1} und S_{R1} bzw. der Position der Spiegel 11 - 14. Im Ausführungsbeispiel weist in den Strahlengängen S_{L1} und S_{R1} jeweils eine Spiegelfläche schräg nach oben (Spiegel 11 und 14) und eine schräg nach unten (Spiegel 12 und 13).

Die Reihenfolge der feststehenden bzw. einstellbaren Spiegel 11 - 14 im jeweiligen Strahlengang S_{L1} bzw. S_{R1} ist für die Funktion des Spiegelkabinetts 5 unerheblich. Sie kann nach praktischen Gesichtspunkten festgelegt werden, z. B. nach Platzbedarf oder Zugänglichkeit bei der Justage.

Mit dem gemeinsamen Umlenkspiegel 15 können die geforderten Längen I_{M}, I_{L1} und I_{R1} der Strahlengänge S_{M}, S_{L1} und S_{R1} in einer Platz sparenden Anordnung realisiert werden. Die Elevation der Bildaufnahmeeinrichtung 6 kann vom Ausführungsbeispiel abweichen. Ebenso ist der Umlenkspiegel 15 für die Funktion des Spiegelkabinetts 5 nicht zwingend notwendig. Die Spiegel 9-15 können z. B. herkömmliche Vorderflächenspiegel sein.

Die feststehenden Spiegelhalter 16, 17 für die Spiegel 9 und 10 sowie die Halter bzw. Montagesockel für die übrigen optischen Komponenten können z. B. aus Metall gefräst sein oder aus handelsüblichen optischen Montagebauteilen bestehen, so dass eine stabile, orthogonale Befestigung auf der Grundplatte 23 gewährleistet ist.

Die feststehenden Halter 18 und 21 werden bevorzugt aus einem Metall, wie z. B. Aluminium, gefräst, und weisen eine den Winkeln α bzw. δ entsprechend geneigte Montagefläche für die Spiegel 11 und 14 auf, so dass deren Kippwinkel α und δ ohne zusätzliche Justage der Elevation der Spiegel 11 und 14 gewährleistet ist.

Die Halter 19 und 20 bestehen z. B. aus einer handelsüblichen Dreipunkt-Verstelleinheit mit einem (nicht dargestellten) Sockel, so dass der betreffende Strahlengang sowohl um eine vertikale Achse, z. B. zur Kompensation von Fertigungs- bzw. Montagetoleranzen, als auch um eine horizontale Achse, zur Einstellung der Elevation der Spiegel 12 und 13 bzw. der Winkel β und γ gekippt werden kann. Durch eine geeignete Positionierung der Spiegel des Spiegelkabinetts 5 und ggf. passende Auswahl der Elevation einzelner Spiegel kann die Entstehung von störenden Lichtreflexen auf den Flaschen weitgehend minimiert oder idealerweise vollständig vermieden werden.

Die Grundplatte 23 ist nicht auf ein bestimmtes Material oder eine bestimmte Form beschränkt. Die Grundplatte 23 ist bevorzugt so geformt, dass sie mit dem bereits montierten Spiegelkabinett 5 in einem entsprechenden (nicht dargestellten) Montagerahmen und/oder Gehäuse befestigt werden kann. Die Grundplatte 23 umfasst jedoch in jedem Fall eine Struktur mit einer oder mehreren zueinander parallelen Montageflächen, auf der die optischen Komponenten stabil und mit der geforderten Toleranz, z. B. in Montagebohrungen, befestigt werden können.

Die Abschirmung 31 ist zwischen dem Spiegelkabinett 5 und der Lichtquelle 4 angeordnet, und verhindert unerwünschte Restlichtreflexe, soweit sie nicht schon durch eine geschickte Spiegelanordnung minimiert werden, um die Bildauswertung nicht zu behindern. Die Blende 33 ist im Spiegelkabinett 5, zwischen den Randstrahlen der Bild gebenden Strahlengängen S_{M}, S_{L1} und S_{R1} angeordnet.

Bei Montage und Justage der erfindungsgemäßen Inspektionsvorrichtung 1 kann wie folgt gearbeitet werden.

Das Spiegelkabinett 5 wird auf der Grundplatte 23 montiert und diese in der Inspektionsvorrichtung 1, z. B. in einem (nicht dargestellten) Montagerahmen und/oder Gehäuse, befestigt. Zwischen die Lichtquelle 4 und das Spiegelkabinett 5 wird eine Flasche 3 in eine Prüfposition gebracht und die Flaschenansichten A' - C' mit der Bildaufnahmevorrichtung 6 in den Bildbereichen M, L und R abgebildet. Durch Verdrehen und Verkippen der Bildaufnahmevorrichtung 6 in ihrem (nicht dargestellten) Halter wird die im Bereich M abgebildete Flaschenansicht A' orthogonal auf einer gewünschten Referenzposition im Bild 7 ausgerichtet.

Durch vertikales Verkippen des Spiegels 12 wird die Flaschenansicht B' vertikal (gleiche Höhe der Flaschen im Bild) mit der Ansicht A' abgeglichen, so dass beide Ansichten A' und B' z. B. auf der in Fig. 3 angedeuteten Hilfslinie 27 zu stehen scheinen. Die Elevation des feststehenden Spiegels 11, bzw. der Kippwinkel α, wirkt mit der bei korrekter vertikaler Ausrichtung der Flaschenansicht B' im Bild 7 eingestellten Elevation des verstellbaren Spiegels 12, bzw. dem Kippwinkel β, so zusammen, dass eine durch Zentralprojektion verursachte Bildverzerrung auf dem Bildbereich gleichzeitig kompensiert wird. Dadurch wird eine Bildverzerrung vermieden bzw. reduziert, bei der der obere Bereich der Flaschenansicht B' zur Bildmitte 8 hin zu stürzen scheint.

Durch horizontales Verkippen des verstellbaren Spiegels 12 werden fertigungs- bzw. montagebedingte Toleranzen im Strahlengang S_{L1} ausgeglichen und die Flaschenansicht B' auf eine gewünschte horizontale Position im Bildbereich L₁ eingestellt. Die Reihenfolge der obigen Justageschritte ist nicht festgelegt.

Die Flaschenansicht C' wird in analoger Weise durch Verkippen des Spiegels 13 im Bildbereich R₁ ausgerichtet. Gleichzeitig bewirken die Kippwinkel γ und δ gemeinsam eine Kompensation der durch Zentralprojektion verursachten Bildverzerrung.

Die erfindungsgemäße Inspektionsvorrichtung 1 erübrigt das bei herkömmlichen Inspektionsvorrichtungen nötige schrittweise Justieren mehrerer Spiegel eines Strahlengangs und verbessert gleichzeitig die Bildqualität. Durch die festgelegte Elevation der Spiegel 11 und 14 werden reproduzierbare Bedingungen für eine effiziente Montage geschaffen. Die Größenanpassung und die Bildentzerrung erleichtern eine korrekte Auswertung der Flaschenansichten A', B' und C'.

## Patentansprüche

1. Inspektionsvorrichtung (1) zur optischen Prüfung von Flaschen (3), umfassend:
- eine Bildaufnahmevorrichtung (6) zur Erzeugung eines Bildes (7) mit mehreren horizontal nebeneinander liegenden Bildbereichen (M, L₁, R₁), von denen wenigstens zwei Bereiche (L₁, R₁) seitlich der Bildmitte (8) angeordnet sind;
- ein Spiegelkabinett (5) mit mehreren Strahlengängen (S_{M}, S_{L1}, S_{R1}) zum Umlenken unterschiedlicher umfänglicher Seitenansichten (A, B, C) einer zu prüfenden Flasche (3) in Richtung der Bildbereiche (M, L₁, R₁), wobei in jedem Strahlengang separate Umlenkspiegel (9 - 14) vorgesehen sind, deren jeweilige Elevation bezüglich einer Grundplatte (23) definiert ist,
**dadurch gekennzeichnet, dass**
- jeweils zwei der separaten Umlenkspiegel (11 - 14) für Strahlengänge (S_{L1}, S_{R1}), die den seitlichen Bildbereichen (L₁, R₁) zugeordnet sind, gegen eine Normale (25) der Grundplatte (23) derart verkippt sind, dass eine durch Zentralprojektion verursachte Bildverzerrung in den seitlichen Bildbereichen (L₁, R₁) kompensiert wird.

2. Inspektionsvorrichtung nach Anspruch 1 oder 2, **dadurch gekennzeichnet, dass** in den Strahlengängen (S_{L1}, S_{R1}), die den seitlichen Bildbereichen (L₁, R₁) zugeordnet sind, die Elevation des einen separaten Umlenkspiegels (11, 14) festgelegt ist und die Elevation des anderen separaten Umlenkspiegels (12, 13) einstellbar ist.

3. Inspektionsvorrichtung nach einem der vorigen Ansprüche, **dadurch gekennzeichnet, dass** in den Strahlengängen (S_{L1}, S_{R1}), die den seitlichen Bildbereichen (L₁, R₁) zugeordnet sind, ein separater Umlenkspiegel (11, 14) schräg nach oben geneigt ist und ein separater Umlenkspiegel (12, 13) schräg nach unten.

4. Inspektionsvorrichtung nach einem der vorigen Ansprüche, **dadurch gekennzeichnet, dass** in den Strahlengängen (S_{L1}, S_{R1}), die den seitlichen Bildbereichen (L₁, R₁) zugeordnet sind, die Absolutwerte der Kippwinkel (α, β, γ, δ) der separaten Umlenkspiegel (11 - 14) gegen die Normale (25) der Grundplatte (23) im Bereich zwischen 0,01° und 1° liegen.

5. Inspektionsvorrichtung nach Anspruch 1, **dadurch gekennzeichnet, dass** die separaten Umlenkspiegel (11 - 14) für Strahlengänge (S_{L1}, S_{R1}), die den seitlichen Bildbereichen (L₁, R₁) zugeordnet sind, so verkippt sind, so dass die projizierten Seitenansichten (B', C') im Bild (7) ferner vertikal zueinander ausgerichtet sind.

6. Inspektionsvorrichtung nach einem der vorigen Ansprüche, **dadurch gekennzeichnet, dass** die separaten Umlenkspiegel (11, 14) mit festgelegter Elevation auf Haltern (18, 21) mit einer der Elevation der Umlenkspiegel (11, 14) entsprechend geneigten Montagefläche befestigt sind.

7. Inspektionsvorrichtung nach einem der vorigen Ansprüche, **dadurch gekennzeichnet, dass** die separaten Umlenkspiegel (9, 10) für den Strahlengang (S_{M}), der dem mittigen Bildbereich (M) zugeordnet ist, rechtwinklig zur Grundplatte (23) angeordnet sind.

8. Inspektionsvorrichtung nach einem der vorigen Ansprüche, **dadurch gekennzeichnet, dass** in jedem Strahlengang (S_{M}, S_{L1}, S_{R1}) zwei separate Umlenkspiegel (9 - 14) vorgesehen sind.

9. Inspektionsvorrichtung nach einem der vorigen Ansprüche, **dadurch gekennzeichnet, dass** die Grundplatte (23) im Wesentlichen rechtwinklig zur Symmetrieachse (41) der Flasche (3) ausgerichtet ist.

10. Inspektionsvorrichtung nach einem der vorigen Ansprüche, **dadurch gekennzeichnet, dass** die Strahlengänge (S_{L1}, S_{R1}), die den seitlichen Bildbereichen (L₁, R₁) zugeordnet sind, länger sind als der Strahlengang (S_{M}), der dem mittigen Bildbereich (M) zugeordnet ist, wobei die Längen (I_{M}, I_{L1}, I_{R1}) der Strahlengänge (S_{M}, S_{L1}, S_{R1}) so abgestuft sind, dass die Seitenansichten (A', B', C') der Flasche (3) in den Bildbereichen (M, L₁, R₁) im Wesentlichen gleich groß sind.

11. Inspektionsvorrichtung nach einem der vorigen Ansprüche, **dadurch gekennzeichnet, dass** die Strahlengänge (S_{L1}, S_{L2}, S_{R1}, S_{R2}), die den seitlichen Bildbereichen (L₁, L₂, R₁, R₂) zugeordnet sind, umso länger sind je weiter der ihnen zugeordnete Bildbereich von der Bildmitte (8) entfernt ist, wobei die Längen (I_{L1}, I_{L2}, I_{R1}, I_{R2}) der Strahlengänge so abgestuft sind, dass die Seitenansichten (B', C', D', E') der Flasche (3) in den Bildbereichen (L₁, L₂, R₁, R₂) im Wesentlichen gleich groß sind.

12. Inspektionsvorrichtung nach Anspruch 10 oder 11, **dadurch gekennzeichnet, dass** das Längenverhältnis (v) von Strahlengängen (S_{M}, S_{L1}, S_{L2}, S_{R1}, S_{R2}), die benachbarten Bildbereichen (M, L₁, L₂, R₁, R₂) zugeordnet sind, zwischen 1,005 und 1,02 beträgt.

13. Inspektionsvorrichtung nach einem der vorigen Ansprüche, **dadurch gekennzeichnet, dass** die Inspektionsvorrichtung (1) ferner eine Lichtquelle (4) zur Be- und/oder Durchleuchtung der Flasche (3) umfasst.

14. Inspektionsvorrichtung nach Anspruch 13, **dadurch gekennzeichnet, dass** zwischen den Strahlengängen (S_{M}, S_{L1}, S_{R1}) eine Blende (33) vorgesehen ist, die eine Bildauswertung störende Lichtreflexe in Flaschenabbildungen verhindert.

## Claims

1. An inspection apparatus (1) for optically examining bottles (3), comprising:
- an image recording device (6) for producing an image (7) with a plurality of horizontally juxtaposed image areas (M, L₁, R₁), at least two (L₁, R₁) of these image areas being arranged laterally of the middle (8) of the image (7);
- a mirror cabinet (5) comprising a plurality of beam paths (S_{M}, S_{L1}, S_{R1}) for deflecting, in the direction of the image areas (M, L₁, R₁), different circumferential side views (A, B, C) of a bottle (3) to be examined, each beam path having provided therein separate deflection mirrors (9 - 14) whose respective elevation is defined with respect to a base plate (23),
**characterized in that**
- two of the separate deflection mirrors (11 - 14) for beam paths (S_{L1}, S_{R1}) associated with the lateral image areas (L₁, R₁) are tilted relative to a normal (25) to the base plate (23) in such a way that an image distortion caused by central projection is compensated for in the lateral image areas (L₁, R₁).

2. An inspection apparatus according to claim 1 or 2, **characterized in that**, in the beam paths (S_{L1}, S_{R1}) associated with the lateral image areas (L₁, R₁), the elevation of one of the separate deflection mirrors (11, 14) is fixed and the elevation of the other separate deflection mirror (12, 13) is adjustable.

3. An inspection apparatus according to one of the preceding claims, **characterized in that**, in the beam paths (S_{L1}, S_{R1}) associated with the lateral image areas (L₁, R₁), one separate deflection mirror (11, 14) is inclined at an oblique angle upwards and another separate deflection mirror (12, 13) is inclined at an oblique angle downwards.

4. An inspection apparatus according to one of the preceding claims, **characterized in that**, in the beam paths (S_{L1}, S_{R1}) associated with the lateral image areas (L₁, R₁), the absolute values of the tilting angles (α, β, γ, δ) of the separate deflection mirrors (11 - 14) relative to the normal (25) to the base plate (23) range from 0.01° to 1°.

5. An inspection apparatus according to one of the preceding claims, **characterized in that** the separate deflection mirrors (11 - 14) for beam paths (S_{L1}, S_{R1}) associated with the lateral image areas (L₁, R₁) are tilted in such a way that the projected side views (B', C') in the image (7) are additionally oriented vertically to one another.

6. An inspection apparatus according to one of the preceding claims, **characterized in that** the separate deflection mirrors (11, 14) are, with a fixed elevation, secured in position on holders (18, 21) having a mounting surface that is inclined in accordance with the elevation of these deflection mirrors (11, 14).

7. An inspection apparatus according to one of the preceding claims, **characterized in that** the separate deflection mirrors (9, 10) for the beam path (S_{M}) associated with the central image area (M) are arranged at right angles to the base plate (23).

8. An inspection apparatus according to one of the preceding claims, **characterized in that** each beam path (S_{M}, S_{L1}, S_{R1}) has provided therein two separate deflection mirrors (9 - 14).

9. An inspection apparatus according to one of the preceding claims, **characterized in that** the base plate (23) is oriented substantially at right angles to the symmetry axis (41) of the bottle (3).

10. An inspection apparatus according to one of the preceding claims, **characterized in that** the beam paths (S_{L1}, S_{R1}) associated with the lateral image areas (L₁, R₁) are longer than the beam path (S_{M}) associated with the central image area (M), the lengths (I_{M}, I_{L1}, I_{R1}) of the beam paths (S_{M}, S_{L1}, S_{R1}) being graded such that the side views (A', B', C') of the bottle (3) in the image areas (M, L₁, R₁) have substantially the same size.

11. An inspection apparatus according to one of the preceding claims, **characterized in that** the length of the beam paths (S_{L1}, S_{L2}, S_{R1}, S_{R2}) associated with the lateral image areas (L₁, L₂, R₁, R₂) increases as the distance between the image area associated with the respective beam path and the middle (8) of the image (7) increases, the lengths (I_{L1}, I_{L2}, I_{R1}, I_{R2}) of the beam paths being graded such that the side views (B', C', D', E') of the bottle (3) in the image areas (L₁, L₂, R₁, R₂) have substantially the same size.

12. An inspection apparatus according to claim 10 or 11, **characterized in that** the length ratio (v) of beam paths (S_{M}, S_{L1}, S_{L2}, S_{R1}, S_{R2}) associated with juxtaposed image areas (M, L₁, L₂, R₁, R₂) lies between 1.005 and 1.02.

13. An inspection apparatus according to one of the preceding claims, **characterized in that** the inspection apparatus (1) additionally comprises a light source (4) for exposing the bottle (3) to incident light and/or to transmitted light.

14. An inspection apparatus according to claim 13, **characterized in that** a shade (33) is provided between the beam paths (S_{M}, S_{L1}, S_{R1}), said shade (33) preventing light reflections in bottle images that would disturb an evaluation of said images.

## Revendications

1. Installation d'inspection (1) pour le contrôle optique de bouteilles (3), comprenant :
- un dispositif de prise de vue (6) pour produire une image (7) avec plusieurs secteurs d'image (M, L₁, R₁) situés côte à côte horizontalement, et dont au moins deux secteurs (L₁, R₁) sont agencés latéralement à la médiane de l'image (8) ;
- une cabine de miroirs (5) avec plusieurs trajets de faisceau optique (S_{M}, S_{L1}, S_{R1}) pour dévier différentes vues latérales (A, B, C) périphériques d'une bouteille (3) à contrôler, en direction des secteurs d'image (M, L₁, R₁), des miroirs de déviation (9-14) séparés dont l'élévation respective est définie par rapport à une plaque de base (23), étant prévus dans chaque trajet de faisceau optique,
**caractérisée en ce que**
respectivement deux des miroirs de déviation (11-14) séparés pour des trajets de faisceau optique (S_{L1}, S_{R1}), qui sont associés aux secteurs d'image latéraux (L₁, R₁), sont basculés par rapport à une normale (25) de la plaque de base (23) de manière telle, qu'une distorsion d'image produite par une projection centrale dans les secteurs d'image latéraux (L₁, R₁) soit compensée.

2. Installation d'inspection selon la revendication 1, **caractérisée en ce que** dans les trajets de faisceau optique (S_{L1}, SR₁), qui sont associés aux secteurs d'image latéraux (L₁, R₁), l'élévation d'un miroir de déviation séparé (11, 14) est fixée, et l'élévation de l'autre miroir de déviation séparé (12, 13) est réglable.

3. Installation d'inspection selon l'une des revendications précédentes, **caractérisée en ce que** dans les trajets de faisceau optique (S_{L1}, S_{R1}), qui sont associés aux secteurs d'image latéraux (L₁, R₁), un miroir de déviation séparé (11, 14) est incliné de manière oblique vers le haut, et un miroir de déviation séparé (12, 13) est incliné de manière oblique vers le bas.

4. Installation d'inspection selon l'une des revendications précédentes, **caractérisée en ce que** dans les trajets de faisceau optique (S_{L1}, S_{R1}), qui sont associés aux secteurs d'image latéraux (L₁, R₁), les valeurs absolues des angles de basculement (α, β, γ, δ) des miroirs de déviation séparés (11-14) par rapport à la normale (25) à la plaque de base (23), se situent dans une plage entre 0,01° et 1°.

5. Installation d'inspection selon la revendication 1, **caractérisée en ce que** les miroirs de déviation séparés (11-14) pour des trajets de faisceau optique (S_{L1}, S_{R1}), qui sont associés aux secteurs d'image latéraux (L₁, R₁), sont basculés de manière telle, que les vues de côté projetées (B', C') soient par ailleurs orientées verticalement les unes par rapport aux autres dans l'image (7).

6. Installation d'inspection selon l'une des revendications précédentes, **caractérisée en ce que** les miroirs de déviation séparés (11, 14) à élévation définie, sont fixés sur des supports (18, 21) présentant une surface de montage inclinée conformément à l'élévation des miroirs de déviation (11, 14).

7. Installation d'inspection selon l'une des revendications précédentes, **caractérisée en ce que** les miroirs de déviation séparés (9, 10) pour le trajet de faisceau optique (S_{M}), qui est associé au secteur d'image médian (M), sont agencés perpendiculairement à la plaque de base (23).

8. Installation d'inspection selon l'une des revendications précédentes, **caractérisée en ce que** dans chaque trajet de faisceau optique (SM, S_{L1}, S_{R1}) sont prévus deux miroirs de déviation séparés (9-14).

9. Installation d'inspection selon l'une des revendications précédentes, **caractérisée en ce que** la plaque de base (23) est orientée sensiblement de manière perpendiculaire à l'axe de symétrie (41) de la bouteille (3) .

10. Installation d'inspection selon l'une des revendications précédentes, **caractérisée en ce que** les trajets de faisceau optique (S_{L1}, S_{R1}), qui sont associés aux secteurs d'image latéraux (L₁, R₁) sont plus longs que la trajet de faisceau optique (S_{M}), qui est associé au secteur d'image médian (M), les longueurs (I_{M}, I_{L1}, I_{R1}) des trajets de faisceau optique (SM, S_{L1}, S_{R1}) étant étagés de façon telle, que les vues de côté (A', B', C') de la bouteille (3) soient sensiblement de la même grandeur dans les secteurs d'image (M, L₁, R₁).

11. Installation d'inspection selon l'une des revendications précédentes, **caractérisée en ce que** les trajets de faisceau optique (S_{L1}, S_{L2}, S_{R1}, S_{R2}), qui sont associés aux secteurs d'image latéraux (L₁, L₂, R₁, R₂), sont d'autant plus longs que le secteur d'image respectivement associé est plus éloigné de la médiane de l'image (8), les longueurs (l_{L1}, l_{L2}, l_{R1}, l_{R2}) des trajets de faisceau optique étant étagés de façon telle, que les vues de côté (B' , C' , D' , E') de la bouteille (3) soient sensiblement de la même grandeur dans les secteurs d'image (L₁, L₂, R₁, R₂).

12. Installation d'inspection selon la revendication 10 ou la revendication 11, **caractérisée en ce que** le rapport de longueur (v) des trajets de faisceau optique (S_{M}, S_{L1}, S_{L2}, S_{R1}, S_{R2}), qui sont associés à des secteurs d'image (M, L₁, L₂, R₁, R₂), prend une valeur entre 1,005 et 1,02.

13. Installation d'inspection selon l'une des revendications précédentes, **caractérisée en ce que** l'installation d'inspection (1) comprend, par ailleurs, une source de lumière (4) pour éclairer de manière directe et/ou traversante la bouteille (3).

14. Installation d'inspection selon la revendication 13, **caractérisée en ce qu'**entre les trajets de faisceau optique (S_{M}, S_{L1}, S_{R1}), il est prévu un diaphragme (33) empêchant des réflexions parasites de lumière dans des représentations de bouteille, qui perturbent le traitement de l'image.
